# EUROPEAN PATENT SPECIFICATION

(11) **EP 2 102 410 B1**
(45) Date of publication and mention of the grant of the patent: **18.12.2013**
(21) Application number: 07848207.2
(22) Date of filing: 11.12.2007
(51) Int. Cl.: D21F 1/48, F16C 13/00

(54) **GEAR-SYSTEM ARRANGEMENT FOR DRIVING A VACUUM ROLL AND FOR SUPPORTING THE INTERNAL STRUCTURES OF A VACUUM ROLL**
GETRIEBESYSTEM ZUM ANTREIBEN EINER VAKUUMWALZE UND ZUM TRAGEN DER INTERNEN STRUKTUREN EINER VAKUUMWALZE
ENSEMBLE SYSTÈME D'ENGRENAGES POUR ENTRAÎNER UN ROULEAU ASPIRANT ET POUR PORTER LES STRUCTURES INTÉRIEURES D'UN ROULEAU ASPIRANT

(30) Priority: 14.12.2006 FI 20065806
(43) Date of publication of application: 23.09.2009
(73) Proprietor: Moventas Gears Oy, 40100 Jyväskylä (FI)
(72) Inventor: OINONEN, Juha, 40250 Jyväskylä (FI)
(74) Representative: Helke, Kimmo Kalervo
(86) International application number: PCT/FI2007/050676
(87) International publication number: WO 2008/071845

(56) References cited:
- FI-B- 43 534
- FI-B- 56 992
- US-A- 4 111 065
- US-A- 4 352 228

## Description

The present invention relates to an assembly according to the preamble of claim 1.

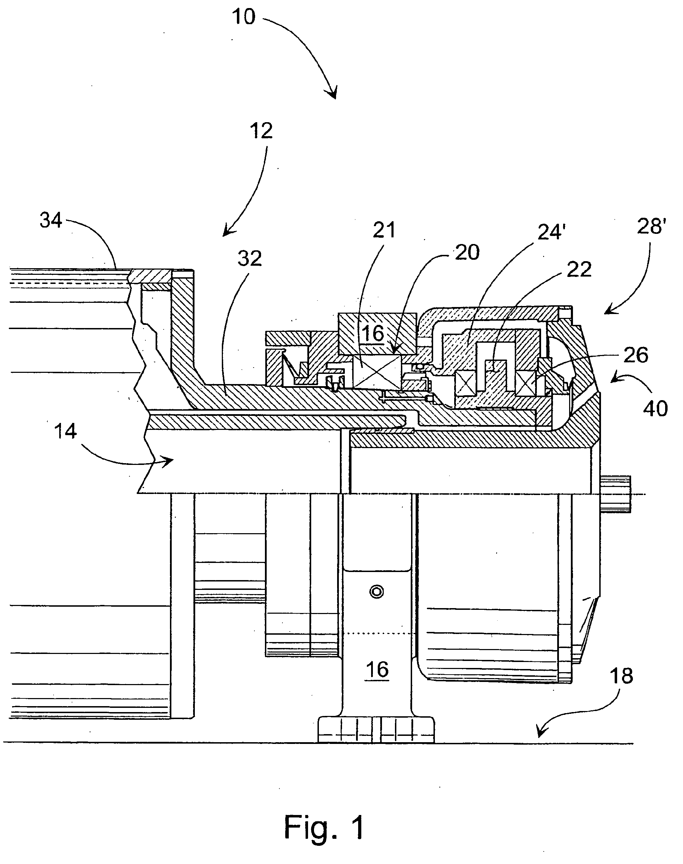

Such an assembly, which is shown in Figure 1, is known from the prior art. The gear-system arrangement includes a machine frame, on which the vacuum roll is supported by a carrier-bearing assembly. The carrier-bearing assembly is generally attached to the inside of the machine frame, so that the vacuum roll is supported from its outer surface on the machine frame by the carrier-bearing assembly. The internal structures of the vacuum roll are supported by a carrier ring, which is attached to the machine frame. A gear housing is on the inside of the carrier ring. A gearwheel for driving the vacuum roll is attached to the vacuum roll. The gearwheel is attached to a flange shaft that is a continuation of the shell of the roll. The gearwheel and the gear-system housing being supported on each other, the gear housing is also supported on the flange shaft. The flange shaft, which is a continuation of the shell of the roll, is in turn supported with the aid of a carrier-bearing assembly on the machine frame. The gearwheel is supported by the drive-bearing assembly on the gear housing, from where the torque is transmitted to the machine frame through a torque support. The construction in question according to the prior art is complex and expensive.

The drive gear system of a vacuum roll can also be set in bearings as disclosed in patent US 5 860 322. In the patent in question, a carrier-bearing assembly is used, by means of which the vacuum roll is supported from inside the vacuum roll. The gear-system arrangement thus becomes complicated, in order for the carrier-bearing assembly inside the vacuum roll to be supported on the machine frame. In addition, as the vacuum roll is supported from the inside on the machine frame inside, the vacuum connection is considerably reduced in size.

The invention is intended to create a gear-system arrangement, which is simpler than previously and cheaper to manufacture, for driving a vacuum roll and for supporting the internal structures of the vacuum roll. These objectives are attained by means of an assembly according to the present invention as stated in the accompanying Claim 1. As the gear housing is arranged as part of the carrier ring, a construction that is simpler than previously and cheaper to manufacture is achieved.

In the press in the press section of a paper machine, vacuum rolls are used to improve water removal from the press nips. Structures on the inside of the vacuum roll are used to guide the vacuum to the desired parts of the surface of the vacuum roll. A gear-system arrangement is used to drive the vacuum roll and to support the internal structures of the vacuum roll. The gear-system arrangement includes a machine frame supported on the foundation, in which machine frame the vacuum roll is in turn supported on a carrier-bearing assembly. In other words, the carrier-bearing assembly is on the inside of the machine frame, supporting the vacuum roll from outside indirectly on the machine frame. A gearwheel, through which the vacuum roll is driven, is attached to the vacuum roll. More specifically, the gearwheel attached to the vacuum roll is attached to the flange shaft of the vacuum roll. A gear housing, supporting the gearwheel, is attached to the machine frame. Between the gearwheel and the gear housing there is a drive-bearing assembly. In other words, the gearwheel and the drive-bearing assembly are supported on each other. In addition, a carrier ring, which is used to support the internal structures of the vacuum roll, is attached to the machine frame. The.gear housing is integrated as part of the carrier ring. A solution of this kind is suitable for both slow and high-speed machines, so that there are extensive opportunities to apply it. The integration of the gearwheel with the carrier ring reduces the price of the gear-system arrangement. In addition, various shaft positions, gear-ratio changes, and oil-removal connections can be more easily implemented in the gear-system arrangement. In addition, by means of the solution according to the invention it is possible to reduce the diameter of the carrier ring and slightly reduce the length of the gear-system arrangement. In addition, the gearwheel and the vacuum roll are connected to each other by means of a flexible coupling, i.e. an elastic coupling. The use of a flexible coupling achieves a significant advantage, as it permits the gearwheel and the vacuum roll to operate in a controlled manner, even though there may be a small error in the angle or shaft between them. By means of the flexible coupling, it is possible to eliminate problems arising from vibration and deflection. A flexible coupling of this kind can be located very freely in the axial direction of the shell.

In one embodiment, the flexible coupling is a flexible pin coupling. A pin coupling is advantageous, as it is relatively rigid flexible coupling. A pin coupling is suitable for eliminating the drawbacks caused by angle and shaft errors and by flexing.

In a second embodiment, the flexible coupling is located on the centre line of the carrier-bearing assembly, so that it becomes possible to easily limit the maximum axial motion of the flexible coupling to be the same as the radial play of the carrier-bearing assembly. The play due to angle errors, appearing during operation, is thus mainly converted to an axial motion, which is permitted better by a flexible coupling.

In a third embodiment, the gear-system assembly is arranged to transmit a power of 100 - 1500 kW, preferably 600 - 1000 kW. The forces transmitted in a gear-system arrangement of this size class are so large that in them a gear-system arrangement with a torque support is used to permit errors. In the gear-system arrangement according to the invention, the gear housing is integrated as part of the carrier ring, in which case the gear housing is permanently attached to the machine frame.

In a fourth embodiment, the gear housing integrated in the gear-system arrangement is attached to the machine frame in such a way that the torque acting on the gear housing is transmitted through the machine frame to the foundation. In other words, the gear housing is attached to the machine frame by a permanent attachment. A pinion stand, in which the gear housing is attached by a permanent attachment to the machine frame, is a more advantageous embodiment than a pin gear, in which the gear housing is attached to the machine frame by a torque support. A pinion stand is a more advantageous embodiment than a pin gear, as a pinion stand usually has a smaller vibration effect than a pin gear. In addition, a flexible coupling will further reduce the vibration effect.

In a fifth embodiment, the carrier ring, in which the gear housing is integrated, is lower than the machine frame. In other words, the external height of the machine frame is greater than that of the gear housing. Thus the location is limited by the size of the machine frame, and not by the size of the gear housing. As the machine frame retains its previous size, the gear-system arrangement in question can be located in even more cramped places than previously.

In a further embodiment, the drive-bearing assembly consists of two bearings, one at each side of the gearwheel.

In the following, the invention is described in detail with reference to the accompanying drawings showing some embodiments of the invention, in which
- Figure 1: shows a gear-system arrangement according to the prior art, and
- Figure 2: shows the gear system arrangement according to the invention.

Figure 1 shows a gear-system arrangement 10 according to the prior art on a foundation 18. The gear-system arrangement 10 includes a machine frame 16, to which the vacuum roll 12 is attached by means of a carrier-bearing assembly 20. The carrier-bearing assembly 20 is attached to the inside of the machine frame 16, so that the vacuum roll 12 is supported by means of the carrier-bearing assembly 20 on the machine frame 16 from its flange shaft 32. The structures 14 inside the vacuum roll are supported by a carrier ring 28' which is attached to the machine frame 16. There is a breather hole 40 in the carrier ring 28'. The vacuum roll 12 includes a flange shaft 32 and a shell 34. A gearwheel 22, for driving the vacuum roll 12, is attached to the vacuum roll 12, more specifically to the flange shaft 32 of the vacuum roll. The vacuum connection of the vacuum roll is connected to the carrier ring, or to the internal structures of the vacuum roll that are carried by it. The gear housing 24' is on the inside of the carrier ring 28'. The gearwheel 22 is supported.by a drive-bearing assembly 25 on the gear housing 24' through a torque support. The torque support permits a small angle or shaft error. However, the torque support is always located beneath the carrier-bearing assembly. The construction of a gear-system arrangement implemented using a construction of this kind is complicated and expensive to manufacture. In addition, the torque-transmission means, i.e. the torque support, located beneath the carrier-bearing assembly can act as a possible transmitter of impulses.

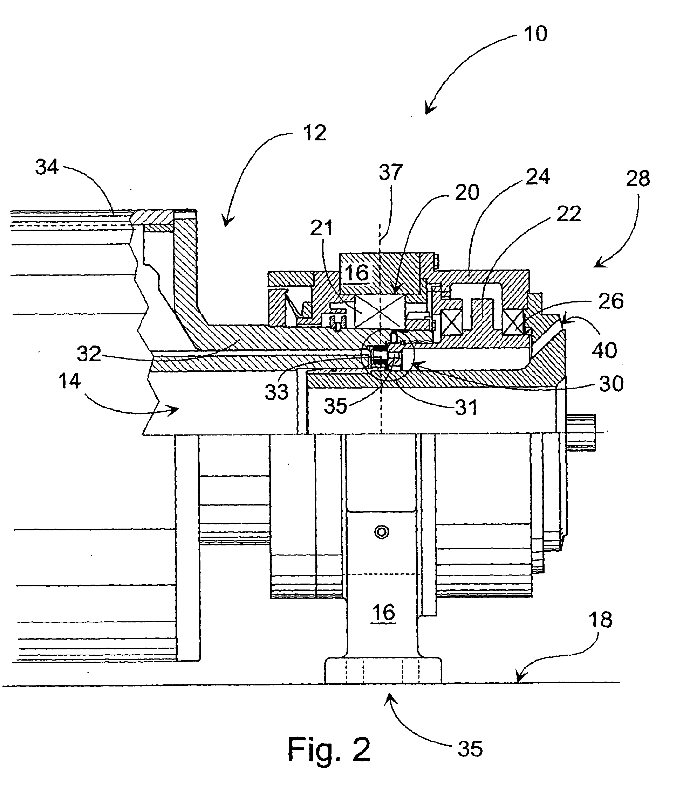

Figure 2 shows the gear-system arrangement 10 according to the invention, the vacuum roll 12 forming part of which includes a flange shaft 32 and the vacuum-roll shell 34, which are attached to each other. The gear-system arrangement 10 is used to drive the vacuum roll 12 through the flange shaft 32 and to support the internal structures 14 of the vacuum roll 12. The gear-system arrangement 10 includes the machine frame 16, which is supported on a foundation 18. A carrier-bearing assembly 20, which usually consists of a single carrier bearing 21, is attached inside the machine frame 16. The carrier-bearing assembly 20 is used indirectly to support the vacuum roll 12 on the machine frame 16. More specifically, the carrier-bearing assembly 20 attached inside the machine frame 16 is used to support the vacuum roll 12 from the outside, through its flange shaft 32, on the machine frame 16. A gearwheel 22 for driving the vacuum roll is attached to the vacuum roll 12. The said gearwheel 22 is driven using a second smaller gearwheel, which is, in turn, driven by a motor. The gearwheel 22 is supported indirectly on the machine frame 16 through the gear housing 24, i.e. the gear housing 24 is attached to the machine frame 16, in order to support the gearwheel. There is a drive-bearing assembly 26 between the gear housing 24 and the gearwheel 22. The gear-system arrangement 10 includes a carrier ring 28 for supporting the internal structures 14 of the vacuum roll 12 on the machine frame 16. There is a breather hole 40 in the carrier ring 28. In addition, the gear housing 24 is arranged to form part of the carrier ring 28, i.e. there is no separate gear housing, instead the gear housing 24 is integrated as part of the carrier ring 28. The internal diameter of the carrier-bearing assembly is 400 - 1200 mm, preferably 700 - 1000 mm.

In the gear-system arrangement 10 according to the invention, shown in Figure 2, the gearwheel 22 and the vacuum roll 12 are connected to each other by a flexible coupling 30, which permits the gearwheeel and vacuum roll to operate as desired, even though there may be a small angle or shaft error between them. The flexible coupling is preferably a flexible pin coupling 31, so that the flexible coupling is made suitably rigid. The pin coupling consists of a flexible part 33 and an attachment part 35. The attachment part 35 is attached to the gearwheel while the flexible part 33 is able to flex in contact with the flange shaft 32. It is very advantageous for the flexible part 33 of the pin coupling 31 to be essentially on the centre line 37 of the carrier-bearing assembly 20. It is then possible to easily limit the maximum radial motion of the pin coupling to be the same as the radial play of the carrier-bearing assembly. Thus the play appearing during operation due to angle errors can be mainly converted into an axial movement, which the pin coupling will permit quite well.

In the gear-system arrangement according to the invention, shown in Figure 2, the flexible coupling 30, i.e. the pin coupling 31, is located on the centre line 37 of the carrier-bearing assembly 20. It is then possible to easily limit the maximum radial motion of the flexible coupling to be the same as the radial play of the carrier-bearing assembly. In addition, the flexible coupling permits the gear housing to be attached to the machine frame, as the necessary elasticity for this is implemented in the coupling.

In the gear-system arrangement 10 according to the invention, shown in Figure 2, the integrated gear housing 24 is attached to the machine frame 16, in such a way that the torque acting on the gear housing 24 is transmitted through the machine frame 16 to the foundation 18. In that case, the gear is a pinion stand. A pinion stand is a more advantageous implementation than a pin gear, as a pin gear is more liable to act as an impulse source than a pinion stand.

In the gear-system arrangement 10 according to the invention, shown in Figure 2, the carrier ring 28, in which the gear housing 24 is integrated, is lower than the machine frame 16. Thus the gear-system arrangement can be placed in a smaller space than previously.

In the gear-system arrangement 10 according to the invention, shown in Figure 2, the carrier-bearing assembly 20 and the drive-bearing assembly 26 can be fed with oil using the same oil-feed means.

## Claims

1. **An assembly** of a gear-system arrangement **and a vacuum roll, said gear system arrangement being configured** for driving said vacuum roll and for supporting the internal structures of said vacuum roll, which gear-system arrangement (10) includes:
- a machine frame (16) to be fitted to a supporting foundation (18),
- a carrier-bearing assembly (20), attached inside the machine frame (16), for supporting the vacuum roll (12) on the machine frame (16) from outside the vacuum roll (12),
- a gearwheel (22) attached to the vacuum roll (12), for driving the vacuum roll,
- a gear housing (24) for **supporting the gearwheel (22),**
- a drive-bearing assembly (26) **radially** between **the outer surface** of the gearwheel (22) and **the inner surface of** the gear housing (24), and
- a carrier ring (28) for supporting the vacuum roll's internal structures (14) from the machine frame (16),
**characterized in that the gear housing (24) is an integrated part of the carrier ring (28), and**
the gearwheel (22) and the vacuum roll (12) are connected to each other by a flexible coupling (30).

2. Assembly according to Claim 1, **characterized in that** the flexible coupling (30) is a flexible pin coupling (31).

3. Assembly according to Claim 1 or 2, **characterized in that** the flexible coupling (30) is located essentially on the centre line (37) of the carrier-bearing assembly (20).

4. Assembly according to Claim 2, **characterized in that** the flexible part (33) of the pin coupling is essentially on the centre line (37) of the carrier-bearing assembly (20).

5. Assembly according to any of Claims 1 - 4, **characterized in that** the internal diameter of the carrier-bearing assembly (20) is 400 - 1200 mm, preferably 700 - 1000 mm.

6. Assembly according to any of Claims 1 - 5, **characterized in that** the gear-system arrangement is arranged to transmit a power of 100 - 1500 kW, preferably 600 - 1100 kW.

7. Assembly according to any of Claims 1 - 6, **characterized in that** the gear housing (24), which is integrated in the carrier ring, is attached to the machine frame (16), in such a way that the torque acting on the gear housing (24) is transmitted to the foundation (18) through the machine frame (16).

8. Assembly according to any of Claims 1 - 7, **characterized in that the external height of the machine frame (16) is greater than that of the** the gear housing (24) integrated **to the carrier ring** (20).

9. **Assembly according to any of Claims 1 - 8, characterized in that the drive-bearing assembly (26) consists of two bearings, one at each side of the gearwheel (22).**

## Patentansprüche

1. Zusammenstellung einer Getriebeanordnung und einer Saugwalze, wobei die besagte Getriebeanordnung zum Antrieb der besagten Saugwalze und zum Stützen der inneren Bauteile der besagten Saugwalze konfiguriert ist und die Getriebeanordnung (10) umfasst:
- einen Maschinenrahmen (16) zum Anbringen an einem Tragfundament (18),
- eine im Inneren des Maschinenrahmens (16) befestigte Traglageranordnung (20) zum Abstützen der Saugwalze (12) außerhalb der Saugwalze (12) an dem Maschinenrahmen (16),
- ein an der Saugwalze (12) befestigtes Zahnrad (22) zum Antrieb der Saugwalze,
- ein Getriebegehäuse (24) zum Stützen des Zahnrades (22),
- einen Antriebslagersatz (26), radial zwischen der Außenseite des Zahnrads (22) und der Innenseite des Getriebegehäuses (24) angeordnet, und
- einen Tragring (28) zum Abstützen der inneren Bauteile (14) der Saugwalze an dem Maschinenrahmen (16),
**dadurch gekennzeichnet, dass** das Getriebegehäuse (24) einen integrierten Teil des Tragringes (28) bildet und das Zahnrad (22) und die Saugwalze (12) durch eine elastische Kopplung (30) miteinander verbunden sind.

2. Zusammenstellung nach Anspruch 1, **dadurch gekennzeichnet, dass** die elastische Kopplung (30) aus einer elastischen Bolzenkupplung (31) besteht.

3. Zusammenstellung nach Anspruch 1 oder 2, **dadurch gekennzeichnet, dass** die elastische Kopplung (30) im Wesentlichen auf der Mittellinie (37) der Traglageranordnung (20) angeordnet ist.

4. Zusammenstellung nach Anspruch 2, **dadurch gekennzeichnet, dass** sich das elastische Teil (33) der Bolzenkupplung im Wesentlichen auf der Mittellinie (37) der Traglageranordnung (20) befindet.

5. Zusammenstellung nach irgendeinem der Ansprüche 1 bis 4, **dadurch gekennzeichnet, dass** der Innendurchmesser der Traglageranordnung (20) 400 - 1200 mm, bevorzugt 700 - 1000 mm beträgt.

6. Zusammenstellung nach irgendeinem der Ansprüche 1 bis 5, **dadurch gekennzeichnet, dass** die Getriebeanordnung zur Übertragung einer Leistung von 100 - 1500 kW, bevorzugt von 600 - 1100 kW eingerichtet ist.

7. Zusammenstellung nach irgendeinem der Ansprüche 1 bis 6, **dadurch gekennzeichnet, dass** das Getriebegehäuse (24), das in den Tragring integriert ist, so an dem Maschinenrahmen (16) befestigt ist, dass das auf das Getriebegehäuse (24) wirkende Moment über den Maschinenrahmen (16) in das Fundament (18) geleitet wird.

8. Zusammenstellung nach irgendeinem der Ansprüche 1 bis 7, **dadurch gekennzeichnet, dass** die Außenhöhe des Maschinenrahmens (16) größer als die Höhe des Getriebegehäuses (24) ist, das in den Tragring (20) integriert ist.

9. Zusammenstellung nach irgendeinem der Ansprüche 1 bis 8, **dadurch gekennzeichnet, dass** der Antriebslagersatz (26) zwei Lager, eines auf jeder Seite des Zahnrades (22), umfasst.

## Revendications

1. Assemblage d'un dispositif d'engrenage et d'un rouleau aspirant, ledit dispositif d'engrenage étant configuré pour actionner ledit rouleau aspirant et pour soutenir les structures intérieures dudit rouleau aspirant, lequel dispositif d'engrenage (10) comprend:
- un châssis de la machine (16) à monter sur une base de support (18),
- un ensemble palier porteur (20) attaché à l'intérieur du châssis de la machine (16) pour soutenir le rouleau aspirant (12) sur le châssis de la machine (16) par l'extérieur du rouleau aspirant (12),
- une roue dentée (22) attachée au rouleau aspirant (12) pour commander le rouleau aspirant,
- un carter d'engrenage (24) pour soutenir la roue dentée (22),
- un ensemble palier d'entraînement (26) attaché radialement entre la surface extérieure de la roue dentée (22) et la surface intérieure du carter d'engrenage (24) et
- un anneau de support (28) pour soutenir les structures intérieures (14) du rouleau aspirant sur le châssis de la machine (16),
**caractérisé en ce que** le carter d'engrenage (24) est une partie intégrée de l'anneau de support (28) et la roue dentée (22) et le rouleau aspirant (12) sont reliés ensemble à l'aide d'un raccord flexible (30).

2. Assemblage selon la revendication 1, **caractérisé en ce que** le raccord flexible (30) est un raccord flexible à goupille (31).

3. Assemblage selon la revendication 1 ou 2, **caractérisé en ce que** le raccord flexible (30) est situé essentiellement sur la ligne médiane (37) de l'ensemble palier porteur (20).

4. Assemblage selon la revendication 2, **caractérisé en ce que** la partie flexible (33) du raccord à goupille est essentiellement sur la ligne médiane (37) de l'ensemble palier porteur (20).

5. Assemblage selon l'une quelconque des revendications 1 à 4, **caractérisé en ce que** le diamètre intérieur de l'ensemble palier porteur (20) est de 400 à 1 200 mm, de préférence de 700 à 1 000 mm.

6. Assemblage selon l'une quelconque des revendications 1 à 5, **caractérisé en ce que** le dispositif d'engrenage est disposé de sorte à transmettre une puissance de 100 à 1 500 kW, de préférence de 600 à 1 100 kW.

7. Assemblage selon l'une quelconque des revendications 1 à 6, **caractérisé en ce que** le carter d'engrenage (24), qui est intégré à l'anneau de support, est attaché au châssis de la machine (16) de sorte que le couple qui agit sur le carter d'engrenage (24) est transmis à la base (18) à travers le châssis de la machine (16).

8. Assemblage selon l'une quelconque des revendications 1 à 7, **caractérisé en ce que** la hauteur externe du châssis de la machine (16) est supérieure à la hauteur du carter d'engrenage (24) intégré à l'anneau de support (20).

9. Assemblage selon l'une quelconque des revendications 1 à 8, **caractérisé en ce que** l'ensemble palier d'entraînement (26) comprend deux paliers, un de chaque côté de la roue dentée (22).
